(19) Europäisches Patentamt
European Patent Office
Office européen des brevets

(11) Veröffentlichungsnummer: **0 135 017**
**B1**

(12) **EUROPÄISCHE PATENTSCHRIFT**

(45) Veröffentlichungstag der Patentschrift: **07.10.87**

(51) Int. Cl.⁴: **C 08 G 65/46**

(21) Anmeldenummer: **84108309.0**

(22) Anmeldetag: **14.07.84**

(54) **Verfahren zur Stabilisierung von Polyphenylenetherlösungen.**

(30) Priorität: **22.07.83 DE 3326393**

(43) Veröffentlichungstag der Anmeldung: **27.03.85 Patentblatt 85/13**

(45) Bekanntmachung des Hinweises auf die Patenterteilung: **07.10.87 Patentblatt 87/41**

(84) Benannte Vertragsstaaten: **AT BE DE FR GB NL**

(56) Entgegenhaltungen:
**DE - A - 2 364 319**
**DE - A - 2 755 937**
**DE - B - 2 616 746**
**US - A - 3 379 875**

(73) Patentinhaber: **BASF Aktiengesellschaft, Carl-Bosch-Strasse 38, D-6700 Ludwigshafen (DE)**

(72) Erfinder: **Reffert, Rudi Wilheim, Berliner Strasse 18, D-6711 Beindersheim (DE)**
Erfinder: **Hambrecht, Juergen, Dr., Werderstrasse 30, D-6900 Heidelberg (DE)**
Erfinder: **Muench, Volker, Dr., Luitpoldstrasse 114, D-6700 Ludwigshafen (DE)**
Erfinder: **Echte, Adolf, Dr., Leuschnerstrasse 42, D-6700 Ludwigshafen (DE)**
Erfinder: **Swoboda, Johann, Dr., Neuwiesenstrasse 28, D-6700 Ludwigshafen (DE)**
Erfinder: **Gausepohl, Hermann, Dr., Neuweg 10, D-6704 Mutterstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 135 017 B1

## Beschreibung

Die Erfindung betrifft ein Verfahren zur Herstellung von gegen Molekulargewichtsabbau stabilen hochmolekularen Polyphenylenethern aus einwertigen Phenolen, die in den beiden ortho-Stellungen und gegebenenfalls in meta-Position Alkylsubstituenten aufweisen, durch oxidative Kupplungsreaktion mit Sauerstoff bei Temperaturen zwischen 15 und 50 °C in Anwesenheit eines Katalysatorkomplexes aus einem Kupfersalz und einem organischen Amin in Gegenwart eines Lösungsmittels und anschliessendes Abstoppen der Reaktion und Entfernen der Metallkomponente des Katalysators aus der organischen Lösung durch Zugabe wässriger Lösungen komplex- oder chelatkomplexbildender Mittel und gegebenenfalls reduzierender Substanzen, sowie Hilfs- und Beschleunigungsmittel für die phasenübergreifenden Reaktionen und für die Phasentrennung und Behandeln der organischen Polyphenylenetherlösung während oder nach der Metallkatalysatorabtrennung mit Stabilisatoren.

Polyphenylenether und Verfahren zu ihrer Herstellung sind allgemein bekannt und vielfach beschrieben, wie beispielsweise in den US-PS 3 306 874, 3 306 875, 3 639 656, 3 642 699 und 3 661 848

Die zur Herstellung der Polyphenylenether am häufigsten angewendeten Verfahren umfassen die Selbstkondensation einwertiger Phenole durch Einwirkung von Sauerstoff in Gegenwart von Katalysatoren. Als Katalysatoren werden bevorzugt Metall-Amin-Komplexe, insbesondere Cu-Amin-Komplexe eingesetzt. Als Lösungsmittel werden vorzugsweise aromatische Kohlenwasserstoffe verwendet. Die Reaktion wird gewöhnlich durch Entfernen des Katalysators aus der Reaktionsmischung beendet. Dies geschicht durch die Verwendung von wässrigen Lösungen von anorganischen oder organischen Säuren, wie es z.B. in der DE-OS 21 05 372 im Gegenstromextraktionsverfahren vorgenommen wird. Verwendet werden auch Polyaminocarbonsäuren (s. DE-OS 23 64 319) oder andere Chelatisierungsmittel wie Nitrilotriessigsäure und ihre Natriumsalze oder Ethylendiamintetraessigsäure und ihre Natriumsalze (s. DE-OS 25 32 477), letztere auch in Kombination mit quarternären Ammoniumsalzen (s. US-PS 4 026 870). Beschrieben wird auch die Katalysatorabtrennung mit Hilfe komplexbildender Mittel aus der Gruppe der Bisguanide (s. DE-PS 24 60 325). Neben dem Abbrechen der oxidativen Selbstkondensation hat die Zugabe des komplexbildenden Agens auch die möglichst vollständige Entfernung des Katalysators aus dem Polyphenylenether zum Ziel, da Verunreinigungen des Polymeren durch Metallreste zu einer Verschlechterung des gesamten Eigenschaftsbildes des Polymeren führen. In der Regel muss neben der Entfernung des Katalysatorsystems eine zusätzliche Massnahme ergriffen werden, um die Polyphenylenetherlösungen gegen einen Molekulargewichtsabbau zu stabilisieren. In der DE-OS 26 16 746 ist deshalb vorgeschlagen worden, die Polymerlösungen mit Reduktionsmittel, wie z.B. Natriumdithionit oder Hydrazin zu behandeln. In den meisten Fällen reicht diese Massnahme jedoch nicht aus, um eine Stabilisierung über längere Zeiträume zu erzielen. In den DE-OSen 24 30 130 und 27 54 887 wird deshalb die Zugabe von zweiwertigen Phenolen zusätzlich zu den üblichen Reduktionsmitteln beschrieben. Beispielsweise werden dort Kombinationen aus Natriumdithionit oder Natriumsulfit und Hydrochinon beschrieben. Es hat sich jedoch gezeigt, dass auch diese Massnahme nicht ausreicht, um Polyphenylenoxidlösungen in einem Schritt über längere Zeit bei Temperaturen bis 280 °C gegen einen Molekulargewichtsabbau zu schützen. Darüber hinaus ergaben sich Nachteile bezüglich der Eigenfarbe der Polyphenylenoxidlösungen und insbesondere bei der Abtrennung der wässrigen Lösungen der Reduktionsmittel. Diese werden in der Regel zusammen mit den wässrigen Lösungen der Katalysatorabtrennmittel von der organischen Lösung des Polyphenylenethers abgetrennt. Verwendet man nun die oben genannte Kombination aus Reduktionsmittel und zweiwertigem Phenol, so ergeben sich Probleme bei der Phasentrennung von organischer und wässriger Phase, und eine Folge davon ist, dass die Katalysatorabtrennung mangelhaft wird.

In der DE-A-27 55 937 ist vorgeschlagen worden, zur Stabilisierung 0,1 bis 100 Mole eines chelatbildenden Mittels pro Mol Metallion des Katalysators in Kombination mit einem aromatischen Amin zu verwenden. Auch bei dieser Verfahrensweise bleibt die Eigenfarbe der Polyphenylenoxidlösungen unbefriedigend.

Der Erfindung lag deshalb die Aufgabe zugrunde, ein einfaches und hochwirksames Verfahren zur Abtrennung der Katalysatorreste bei der Selbstkondensation einwertiger Phenole in Gegenwart von Sauerstoff unter gleichzeitiger Stabilisierung des resultierenden Polyphenylenethers gegen Molekulargewichtsabbau zu entwickeln. Die Stabilisierung sollte dabei auch bei Temperaturen bis zu 280 °C über längere Zeit, d.h. mehrere Stunden, wirksam sein.

Diese Aufgabe wird erfindungsgemäss dadurch gelöst, dass die organische Polyphenylenetherlösung mit mindestens einer Verbindung der allgemeinen Struktur I bis IV

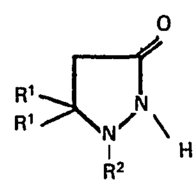

I

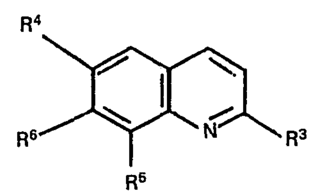

II

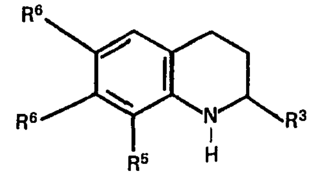

III

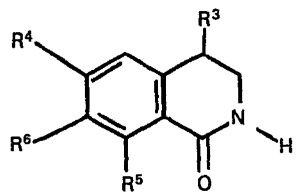

IV

wobei die Variablen $R^1$ Methyl oder H–, $R^2$ Phenyl, Aminophenyl oder $C_{1-8}$ Alkylphenyl, $R^3$, $R^4$ und $R^5$ unabhängig voneinander H– oder OH– und $R^6$ Phenyl, $C_{1-8}$ Alkylphenyl oder $C_{1-8}$ Alkyl bedeuten, behandelt wird.

Bevorzugt ist ein Verfahren, bei dem die Verbindungen der allgemeinen Strukturen I bis IV gleichzeitig mit den komplex- oder chelatkomplexbildenden Mitteln für die Metallkomponente des Katalysators einsetzt werden, und in Mengen von 0,1 bis 100 mMol, bezogen auf 1 Mol eingesetztes Monomeres Phenol, in Form von Lösungen in organischen Lösungsmitteln oder Wasser angewendet werden.

Bevorzugte Verbindungen sind 1-Phenyl-3-pyrazolidon und 4,4-Dimethyl-3-pyrazolidon.

Unter hochmolekularen Polyphenylenethern werden die durch oxidative Kupplung von 2,6-Dialkylphenol zu einer Kette alkylsubstituierter, in para-Stellung durch Sauerstoffatome etherartig gebundene Benzolringe verstanden. Die erfindungsgemässen Polymeren weisen im allgemeinen Molekulargewichte von 10 000 bis 90 000, bevorzugt 20 000 bis 80 000, bestimmt nach der in «Macromolekular Synthesis» 1 (1978), Seite 83 angegebenen Methode, auf. Hochmolekulare Polyhenylenether, auch Poly-(phenyloxide) genannt (vgl. z.B. US-PS 3 661 848; US-PS 3 219 625 oder US-PS 3 378 505), sind an sich aus der Literatur seit längerem bekannt, so dass sich hier eine weitere Beschreibung erübrigt.

Die zur Herstellung der hochmolekularen Polyphenylenether verwendeten einwertigen Phenole, die in den beiden ortho-Stellungen und gegebenenfalls der meta-Position, nicht aber in der para-Stellung Alkylsubstituenten aufweisen, sind die üblichen Phenole wie 2,6-Dimethylphenol, 2,6-Diethylphenol, 2-Methyl-6-ethylphenol, 2-Methyl-6-propylphenol, 2,6-Dibutyl-phenol, 2,3,6-Trimethylphenol sowie Gemische dieser Phenole.

Zur Ausführung der Polykondensation wird Sauerstoff in die 15 bis 50 °C warme Lösung des Monomeren in Gegenwart eines Katalysatorkomplexes eingeleitet. Die Sauerstoffdurchflussgeschwindigkeit ist im wesentlichen die gleiche, wie sie in den US-Patentschriften 3 306 874 und 3 306 875 beschrieben ist. Nach einem bevorzugten Verfahren wird der Katalysator aus Kupfersalz, vorzugsweise Kupfer-I-bromid, Amin und 0,01 bis 5 Gew.-%, 2,6-Dimethylphenyol in die Vorlage der gelösten Monomere eindosiert.

Bei dem für die Polykondensation bekannten Katalysatorkomplex handelt es sich um eine Kombination aus einem organischen Amin, z.B. n-Dibutylamin, Diethylamin, Picolin, Chinolin, Pyridinbasen, Triisopropylamin, Dimethylisopropanolamin, Triethanolamin, Triisopropanolamin oder Diisopropanolamin mit einem Kupfersalz wie Kupfer-I-bromid, Kupfer-I-chlorid, Kupfer-I-jodid, Kupfer-II-acetat, Kupfer-II-chlorid, Kupfer-II-propionat, Kupfer-II-acetessigester oder Kupfer-II-acetylacetonat. Ein bevorzugter Bereich bei der Menge der eingesetzten Amine liegt bei 2,0 bis 25,0 Mol pro 100 Mol des Monomeren, die Konzentration der Amine kann aber in der Reaktionsmischung innerhalb weiter Grenzen variieren, zwecksmässig sind jedoch niedere Konzentrationen. Die Konzentration der Kupfersalze wird gering gehalten und variiert vorzugsweise von 0,2 bis 2,5 Mol pro 100 Mol des Monomeren.

Der Anteil des Lösungsmittels liegt im Bereich von 1:1 bis 20:1, d.h. maximal bis zu einem Überschuss des 20fachen an Lösungsmittel, bezogen auf das Monomere.

Als Lösungsmittel werden Benzol, Toluol und aliphatische Kohlenwasserstoffe, vorzugsweise $C_6$- bis $C_{10}$-Kohlenwasserstoffe, verwendet.

Darüber hinaus kann die Reaktionsmischung einen Aktivator wie ein Diarylguanidin oder ein Diarylformamidin enthalten (vgl. US-PS 3 544 515).

Bei einem geeigneten Verfahren wird die Polykondensationsreaktion bei Temperaturen zwischen 15 und 50, vorzugsweise 18 und 22 °C durchgeführt. Hierzu wird der Sauerstoff in die 15 bis 50 °C warme Lösung des Monomeren in Gegenwart des Aminkomplexes eingeleitet. Die Reaktion ist in kurzer Zeit beendet, d.h. das Katalysatorgemisch wird in 0,1 bis 1,5 Stunden in die Monomerlösung unter Sauerstoff- oder Luftbegasung eindosiert.

Wenn die Polykondensation die gewünschte Ausbeute und das Polymere das gewünschte Molekulargewicht erreicht hat, enthält die Reaktionslösung 1 bis 30 Gew.-% Polyphenylenether, 0,005 bis 1,5 Gew.-% Metallionen und etwa 0,1 bis 6,0 Gew.-% Amin sowie gegebenenfalls geringe Mengen anderer Materialien. Diese Reaktionslösungen werden mit komplex- oder chelatkomplexbildenden Mitteln zur Abtrennung des im Polymeren enthaltenen Metallkatalysators behandelt. Die Art und Weise der Zugabe der metallbindenden Extraktionsmittel ist dabei unkritisch. So können diese Extraktionsmittel in Substanz ebenso wie in wässriger Lösung und in Form ihrer Alkali- oder Erdalkalisalze hinzugegeben werden. Die Zugabe kann auf einmal oder in mehreren Anteilen, kontinuierlich oder diskontinuierlich, mit und ohne zusätzliches Wasser erfolgen. Die Separierung der Metallkomponente kann dabei in geeigneten Verfahrensvorrichtungen wie z.B. in Dekantationstanks, Zentrifugen und ähnlichem vorgenommen werden.

Die Kontaktzeit der komplex- oder chelatkomplexbildenden Agentien mit der katalysatorhaltigen Polyphenylenether-Phase kann innerhalb weiter Grenzen variieren. Bevorzugt werden Reaktionszeiten von 1 Minute bis 5 Stunden. Häufig genügen Reaktionszeiten von 5 bis 60 Minuten.

Die bevorzugte Reaktionstemperatur liegt zwischen 25 und 90 °C, es sind jedoch auch Temperaturbereiche darunter und darüber anwendbar.

Bevorzugt eingesetzt werden als komplex- oder chelatkomplexbildende Mittel solche Verbindungen, die aus der Gruppe der Polyalkylenpolyamine, Polycarbonsäuren, polymere Polycarbonsäuren, Aminopolycarbonsäuren, Aminocarbonsäuren, Aminophosphonsäuren ausgewählt sind. Besonders bevorzugt sind Aminopolycarbonsäuren und ihre Alkali- und/oder Erdalkalisalze, wie Ethylendiamintetraessigsäure, Nitrilotriessigsäure und ihre Mono-, Di- und Trinatriumsalze, Zitronensäure, Glycin, Diglykolsäure, Polyacrylsäure, Polyethylenmaleinsäure, Aminotri(methylenphosphonsäure), Hydroxyethandiphosphonsäure, Hydroxyethyliminodiessigsäure und andere.

Die komplex- oder chelatkomplexbildenden Mittel werden in solchen Mengen eingesetzt, dass mindestens 1 Mol auf 1 Mol des zu entfernenden Metallsalzes entfällt.

Die Abtrennung der Metallkatalysatoren bis zur vollständigen Entfernung aus dem Polyphenylenether-Polymeren kann durch mehrfache Zugabe der Extraktionsmittel und anschliessende Separierung der resultierenden Metallkomplexe und Metallsalze gemäss der bereits beschriebenen Verfahren erfolgen. Bevorzugt wird jedoch ein Verfahren, wonach die gesamte Katalysatormenge in einem Schritt aus dem Polymeren entfernt wird.

Während oder nach der Entfernung der metallischen Komponente des Katalysatorkomplexes mit den oben beschriebenen Extraktionsmitteln wird die organische Polyphenylenetherlösung gemäss dem erfindungsgemässen Verfahren stabilisiert. Dies geschieht durch Zugabe von mindestens einer Verbindung der oben beschriebenen allgemeinen Struktur I bis IV.

Als Verbindungen können beispielsweise eingesetzt werden: 1-Phenyl-3-pyrazolidon, 1-Tolyl-3-pyrazolidon oder 4,4-Dimethyl-3-pyrazolidon.

Bevorzugte Verbindungen sind 1-Phenyl-3-pyrazolidon oder 4,4-Dimethyl-3-pyrazolidon.

Die Stabilisierungsmittel werden in solchen Mengen eingesetzt, dass die organische Polyphenylenoxidlösung auch bei Temperaturen bis zu 280 °C über mehrere Stunden stabil bleibt, d.h. kein Molekulargewichtsabbau und sonstige strukturelle Veränderungen erleidet. In der Regel werden hierfür 0,1 bis 100 mMol, bezogen auf das bei der oxidativen Kupplung eingesetzte Phenol, benötigt, besonders bevorzugt werden 1 bis 10 mMol, bezogen auf 1 Mol monomeres Phenol, verwendet.

Die Zugabe der Stabilisierungsmittel ist unkritisch, sofern sie nur gleichzeitig mit oder nach der Zugabe der komplex- oder chelatkomplexbildenden Mitteln für die Abtrennung der Metallkomponente des Katalysatorkomplexes erfolgt. Sie kann direkt mit oder nach der Zugabe der komplex- oder chelatkomplexbildenden Extraktionsmittel erfolgen, so dass kein zusätzlicher Verfahrensschritt zu der anschliessenden Abtrennung der wässrigen Phase erforderlich ist. Die Zugabe der Stabilisierungsmittel kann aber auch in einem gesonderten Verfahrensschritt erfolgen. In der Regel wird das Stabilisierungsmittel in Form von organischen oder wässrigen Lösungen der organischen Polyphenylenetherlösung zugesetzt. Das Stabilisierungsmittel kann aber auch in reiner Form zugesetzt werden.

Die Kontaktzeit des Stabilisierungsmittels mit der weitgehend katalysatorfreien organischen Polyphenylenetherlösung kann innerhalb weiter Grenzen variieren. Bevorzugt werden Reaktionszeiten von 1 Minute bis 2 Stunden. Häufig reichen jedoch Reaktionszeiten von 3 bis 60 Minuten aus. Die Umsetzung erfolgt in der Regel im Temperaturbereich von 20 bis 120 °C, besonders bevorzugt wird jedoch bei Temperaturen von 50 bis 80 °C gearbeitet. Es sind jedoch auch Temperaturbereiche darunter und darüber anwendbar.

Nach der Entfernung der metallischen Komponente als Komplex- und/oder Salz und der Stabilisierung der Polyphenylenetherlösung kann der Polyphenylenether aus der Lösung nach den in den eingangs erwähnten US-Patentschriften beschriebenen Verfahren isoliert werden. Die Isolierung des Polyphenylenethers ist für die vorliegende Erfindung nicht kritisch. So kann z.B. der Polyphenylenether durch Ausfällen aus einer Reaktionslösung mittels einem Antilösungsmittel, wie beispielsweise einem Überschuss von einem Alkohol, z.B. Methanol, isoliert werden. Das filtrierte Produkt kann in Alkohol aufgeschlämmt und – falls erwünscht – mit einem Entfärbungsmittel gerührt werden und dann wird der Polyphenylenether abfiltriert und nach herkömmlichen Verfahren in Filme, Fasern, ausgeformte Gegenstände dgl. umgewandelt. Andere Alkohole wie Isopropanol, Propanol oder Ethanol sind in gleicher Weise verwendbar.

Wie bereits erwähnt, ist ein bevorzugter Aspekt des vorliegenden Verfahrens die Herstellung von thermostabilen Polyphenylenetherlösungen mit niedrigem Metallgehalt, aus denen die polymeren Stoffe nach sog. Totalisolationsverfahren, z.B. durch Sprühtrocknung, Dampfausfällung und Heisswasserzerkrümelung, gewonnen werden können. Dies erleichtert die wirtschaftliche Anwendung solcher Verfahren, die hinsichtlich der erforderlichen Energie, der Lösungsmittelverluste und dgl. wirtschaftlicher sind als die bekannten Ausfällungsverfahren. Grundbedingung für diese kostengünstigen, weil energiesparenden Aufarbeitungsverfahren ist es jedoch, dass die organischen Polyphenylenetherlösungen bis zu Temperaturen von 280 °C auch über längere Zeit stabil sind.

Die mit der Erfindung erzielten Vorteile bestehen insbesondere darin, dass es mit Hilfe der erfindungsgemässen Stabilisierungsmittel gelingt, bis zu 280 °C thermostabile Polyphenylenetherlösungen zu erzeugen. Gegenüber dem Stand der Technik, insbesondere gegenüber den DE-OSen 24 30 130 und 27 54 887 ist als weiterer Vorteil festzuhalten, dass die erfindungsgemässen Stabilisierungsmittel für sich alleine voll wirksam sind,

während bisher Kombinationen aus Reduktionsmitteln und zweiwertigen Phenolen eingesetzt werden mussten, ohne dass eine Thermostabilität bis 280 °C erzielt werden konnte. Darüber hinaus führen die erfindungsgemässen Stabilisierungsmittel zu sehr hell gefärbten Polyphenyletherlösungen und -formmassen. Schliesslich ist ein weiterer wesentlicher verfahrenstechnischer Vorteil bei der Verwendung der erfindungsgemässen Stabilisierungsmittel, insbesondere gegenüber dem Stand der Technik der DE-OS 27 54 887 festzustellen: während bei der Anwendung der Kombination aus Reduktionsmittel, und zweiwertigem Phenol Probleme bei der Phasentrennung von organischer polyphenylenetherhaltiger und wässriger metallextraktionsmittel- und stabilisierungsmittelhaltiger Phase auftreten sind diese bei den erfindungsgemässen Stabilisierungsmittel wesentlich weniger ausgeprägt – die Phasentrennung erfolgt innerhalb weniger Minuten bei klarer Phasentrennschicht.

Beispiel 1

Herstellung des Poly-(2,6-dimethyl-1,4-phenylen)-ethers

Eine Lösung von 1,2 g Cu-II-chlorid, 1,9 g Natriumbromid und 0,3 g Methyltrioctylammoniumchlorid in 15 ml Methanol werden zu 1100 ml Ethylbenzol hinzugegeben und bei 40 °C gerührt. Anschliessend gibt man 14 g Di-n-butylamin und eine Lösung von 275 g 2,6-Dimethylphenyol in 400 ml Ethylbenzol hinzu und begast die Reaktionslösung mit 0,1 $m^3$ Sauerstoff pro Stunde während 90 Minuten. Danach wird die Sauerstoffzufuhr abgedreht und das Reaktionsgefäss mit Stickstoff gespült.

Reinigung und Stabilisierung der Reaktionslösung

Nach Beendigung der Reaktion wird die Polymerlösung mit 50 ml einer 10%igen wässrigen Lösung eines Copolymerisats, bestehend aus 72 Teilen Acrylsäure und 28 Teilen Maleinsäureanhydrid, einem K-Wert von 30, gemessen in 1%igen Lösungen in Dimethylformamid entsprechend DIN 53 726, versetzt und während 10 Minuten heftig bei 60 °C gerührt, und anschliessend 18 g einer 10%igen Lösung von 1-Phenyl-3-pyrazolidon in Methanol hinzugegeben und nochmals 10 Minuten bei 75 °C heftig gerührt.

Beispiel 2

Die Herstellung und Reinigung des Polyphenylenethers erfolgt wie in Beispiel 1 beschrieben. Zur Stabilisierung wird die Mischung mit 18 g einer 10%igen methanolischen Lösung eines Gemisches aus gleichen Gewichtsteilen 1-Phenyl-3-pyrazolidon und p-Aminophenol versetzt und nochmals 10 Minuten bei 75 °C heftig gerührt.

Vergleichsbeispiel A

Die Herstellung des Polyphenylenethers erfolgte wie in Beispiel 1 beschrieben. Zur Katalysatorabtrennung und Stabilisierung der Polyphenylenetherlösung wurde wie in Beispiel 1 der DE-OS 27 54 887 verfahren. Die toluolische Polyphenylenetherlösung wurde hierzu mit 1,5 g einer 28%igen wässrigen Lösung des Trinatriumsalzes der Ethylendiamintetraessigsäure 10 Minuten lang bei 40 °C heftig verrührt und anschliessend mit 0,66 g Hydrochinon und 2 g Natriumsulfit versetzt und 10 Minuten heftig gerührt.

Vergleichsbeispiel B

Es wurde verfahren wie im Vergleichsbeispiel A, jedoch wurde bei der Stabilisierung kein Natriumsulfit verwendet.

Vergleichsbeispiel C

Es wurde verfahren wie im Vergleichsbeispiel B, jedoch wurde das Hydrochinon durch Brenzkatechin ersetzt.

Prüfungen

Nach der Beendigung der Stabilisierungen wurden die Gemische der Beispiele 30 min absetzen lassen und die organischen Polyphenylenether-Lösungen von den wässrigen Phasen getrennt. Die Cu-Gehalte der organischen Lösungen wurden bestimmt; sie sind in der Tabelle enthalten. Von den stabilisierten organischen Lösungen wurden die Farbzahlen in Anlehnung an eine Iod-Iodkalium-Farbskala (DIN 53 403) ermittelt. Die Lösungen wurden jeweils 4 Stunden bei 70 °C und nochmals 1 Stunde bei 250 °C getempert und die Farbzahlen bestimmt. Von den Ausgangslösungen und nach den Temperungen wurden die Polyphenylenether aus Proben mit Methanol ausgefällt, getrocknet und die reduzierten Viskositäten an 0,5%igen Lösungen in Chloroform bei 30 °C bestimmt.

Ein Vergleich der Werte der Beispiele und der nicht-erfindungsgemässen Vergleichsbeispiele zeigt die Vorteile der erfindungsgemässen Stabilisierung.

Tabelle

| Beispiel | Stabilisierungsmittel | nach 30 min Absetzzeit CU [mg/kg] | Ausgangslösung $\eta\,[\frac{d_1}{g}]$ | Ausgangslösung F.Z. | n. 4 Std. 70 °C $\eta\,[\frac{d_1}{g}]$ | n. 4 Std. 70 °C F.Z. | n. 4 Std. 70 °C + 1 Std. 250 °C $\eta\,[\frac{d_1}{g}]$ | n. 4 Std. 70 °C + 1 Std. 250 °C F.Z. |
|---|---|---|---|---|---|---|---|---|
| A* | Natriumsulfit + Hydrochinon | 1,2 | 0,60 | 100 | 0,58 | 20 | 0,52 | 30 |
| B* | Hydrochinon | 4,0 | 0,60 | 100 | 0,37 | 130 | 0,39 | 160 |
| C* | Brenzkatechin | 5,9 | 0,60 | 100 | 0,53 | 700 | 0,50 | 900 |
| 1 | 1-Phenylpyrazolidon | 0,1 | 0,60 | 100 | 0,62 | 7–10 | 0,63 | 20 |
| 2 | 1-Phenylpyrazolidon + p-Aminophenol | 0,3 | 0,60 | 100 | 0,61 | 10 | 0,64 | 20–30 |

*Vergleichsbeispiele (nicht erfindungsgemäss)

## Patentansprüche

1. Verfahren zur Herstellung hochmolekularer Polyphenylenether aus einwertigen Phenolen, die in den beiden ortho-Stellungen und gegebenenfalls in meta-Position, nicht aber in der para-Stellung Alkylsubstituenten aufweisen, durch oxidative Kupplungsreaktion mit Sauerstoff bei Temperaturen zwischen 15 und 50 °C in Anwesenheit eines Katalysatorkomplexes aus einem Kupfersalz und einem organischen Amin in Gegenwart eines Lösungsmittels im Bereich von 1:1 bis 20:1 Gewichtsteilen, bezogen auf das monomere Phenol, und gegebenenfalls eines Aktivators und anschliessendes Abstoppen der Reaktion und Entfernen der Metallkomponente des Katalysators aus der organischen Lösung durch Zugabe wässriger Lösungen komplex- oder chelatkomplexbildender Mittel und gegebenenfalls reduzierender Substanzen, sowie Hilfs-und Beschleunigungsmittel für die phasenübergreifenden Reaktionen und für die Phasentrennung, und Behandeln der organischen Polypphenylenetherlösung während oder nach der Metallkatalysatorabtrennung mit Stabilisatoren, dadurch gekennzeichnet, dass mindestens ein Stabilisator der allgemeinen Formeln I bis IV

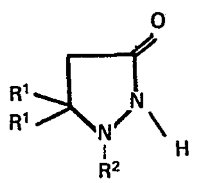

I

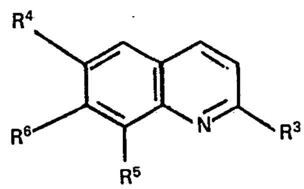

II

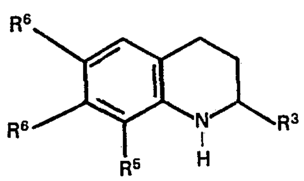

III

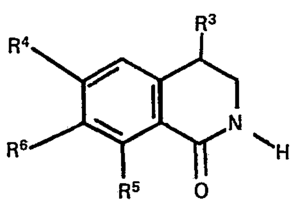

IV

wobei die Variablen $R^1$ Methyl oder H–, $R^2$ Phenyl, Aminophenyl oder $C_{1-8}$ Alkylphenyl, $R^3$, $R^4$ und $R^5$ unabhängig voneinander H– oder OH– und $R^6$ Phenyl, $C_{1-8}$ Alkylphenyl oder $C_{1-8}$ Alkyl bedeuten, verwendet wird.

2. Verfahren gemäss Anspruch 1, dadurch gekennzeichnet, dass die Stabilisatoren in Mengen von 0,1 bis 100 mMol, bezogen auf 1 Mol eingesetztes monomeres Phenol, verwendet werden.

3. Verfahren gemäss den Ansprüchen 1 bis 2, dadurch gekennzeichnet, dass die Stabilisatoren in Form von organischen oder wässrigen Lösungen eingesetzt werden.

## Revendications

1. Procédé de préparation d'éthers polyphényléniques à haut poids moléculaire, à partir de phénols monovalents, qui possèdent des substituants alkyle dans les deux positions ortho et, éventuellement, en position meta, mais pas en position para, par réaction de couplage oxydante avec de l'oxygène, à des températures comprises entre 15 et 50 °C, en présence d'un complexe catalytique d'un sel de cuivre et d'une amine organique, en présence d'un solvant dans les limites de 1:1 à 20:1 parties en poids, rapportées au phénol monomère et, éventuellement, un activateur et, ensuite, on arrête la réaction et on élimine de la solution organique le composant métallique du catalyseur par addition de solutions aqueuses d'agents générateurs de complexes et de complexes chelatés et éventuellement de substances réductrices, ainsi que d'agents auxiliaires et accélérateurs pour les réactions de recouvrement de phases et pour la séparation de phases et on traite la solution d'éther polyphénylènique, pendant ou après la séparation du catalyseur métallique, avec des stabilisants, caractérisé par le fait qu'on utilise au moins un stabilisant de formule générale I à IV

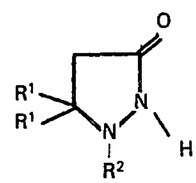

I

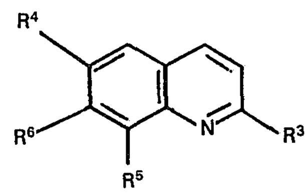

II

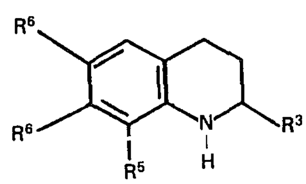

III

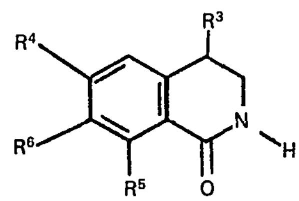

IV

les variables $R^1$ représentant méthyle ou H– $R^2$, phényle, aminophényle ou alkyl $(C_{1-8})$-phényle, $R^3$, $R^4$ et $R^5$ indépendamment l'un de l'autre, représentant H– ou OH– et $R^6$, phényle, alkyl $(C_{1-8})$-phényle ou alkyle en $(C_{1-8})$.

2. Procédé selon la revendication 1, caractérisé par le fait que les stabilisants sont utilisés en quantités de 0,1 à 100 mmoles, pour 1 mole de phénol monomère introduit.

3. Procédé selon les revendications 1 à 2, caractérisé par le fait que les stabilisants sont introduits sous forme de solutions organiques ou aqueuses.

## Claims

1. A process for the preparation of a high molecular weight polyphenylene ether form a monohydric phenol, which is alkyl-substituted at the two ortho-positions but not at the para-position and may or may not be alkyl-substituted at the meta-position, by an oxidative coupling reaction with oxygen at from 15 to 50 °C in the presence of a catalyst complex obtained from a copper salt and an organic amine, and in the presence of from 1 to 20 parts by weight of a solvent per part by weight of the monomeric phenol, and in the presence or absence of an activator, and subsequent termination of the reaction and removal of the metal component of the catalyst from the organic solution by adding an aqueous solution of a complex-forming or chelate-forming agent and, if desired, a reducing substance, as well as auxiliaries and accelerating agents for the reaction which spreads from one phase to the other, and for phase separation, as well as by treatment of the organic polyphenylene ether solution with a stabilizer during or after separation of the metal catalyst, wherein one or more stabilizers of the general formulae I to IV

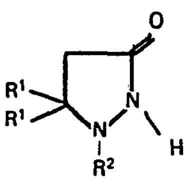

I

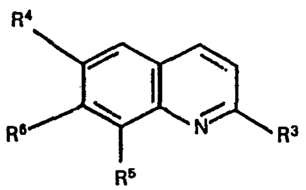

II

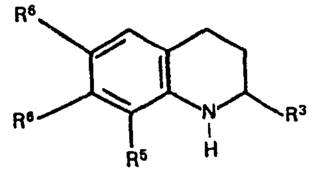

III

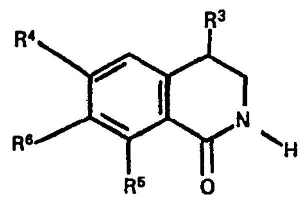

IV

where $R^1$ is methyl or H–, $R^2$ is phenyl or aminophenyl, $R^3$, $R^4$ and $R^5$, independently of one another, are H– or OH–, and $R^6$ is phenyl, $C_{1-8}$-alkylphenyl or $C_{1-8}$-alkyl, are used.

2. A process as claimed in claim 1, wherein the stabilizers are used in an amount of from 0.1 to 100 millimoles per mole of monomeric phenol used.

3. A process as claimed in claim 1 or 2, wherein the stabilizers are used in the form of organic or aqueous solutions.